# EUROPEAN PATENT APPLICATION

(11) **EP 3 062 219 A1**
(43) Date of publication of application: **31.08.2016**
(21) Application number: 15275046.9
(22) Date of filing: 25.02.2015
(51) Int. Cl.: G06F 9/44, G06F 3/0481, G06T 19/00

(54) **A mixed reality system and method for displaying data therein**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A mixed reality system comprising a headset for placing over a user's eyes, in use, said headset including a screen, the system further comprising a processor configured to receive data from one or more sources and display said data (304) on said screen within a three-dimensional virtual environment, wherein said virtual environment includes at least two virtual, interactive data layers (300, 302) on which said data can be selectively displayed and within which said data can be manipulated by a user, each said layer (300, 302) having associated therewith a permission characteristic defining visibility thereof within said three dimensional environment displayed on the screen of another user of said system. A method of displaying data for viewing and/or manipulation by a plurality of users within a mixed reality system is also described.

## Description

This invention relates generally to a mixed reality system and a method for displaying data therein and, more particularly, to such a system and a method for displaying information therein to a plurality of users, and permitting selective viewing and manipulation thereof.

Virtual reality systems are known, comprising a headset which, when placed over a user's eyes, creates and displays a three dimensional virtual environment in which a user feels immersed and with which the user can interact in a manner dependent on the application. For example, the virtual environment created may comprise a game zone, within which a user can play a game.

More recently, virtual reality systems have been developed which enable "screens" of information, derived from multiple data sources, to be displayed within a three-dimensional virtual room, such that when a user places the headset over their eyes, they feel immersed within a virtual room having multiple data sources displayed simultaneously in three dimensions.

More recently, augmented and mixed reality systems have been developed, an image of a real world object can be captured, rendered and placed within a 3D virtual reality environment, such that it can be viewed and manipulated within that environment in the same way as virtual objects therein. Once again, it is envisaged, that data from one or more external data sources can be visually represented and placed within the virtual environment such that multiple data sources are displayed simultaneously in three dimensions. This concept has a large number of potential uses within a working environment, as it allows many forms of information to be displayed, in novel and convenient ways, within an environment that can be tailored to the user.

An extension of such a system provides a plurality of headsets, each displaying a user environment, within which a plurality of respective users can share information in the same way as physical objects and information can be shared within the real world environment.

However, problems may arise in the case where there are a number of different users of the system, some or all of which have different authorisations and permissions to access and/or manipulate the information provided. When there are multiple people working in a close, collaborative environment, different people will be authorised for, and require, access to different information and different security levels. In addition, there are other situations envisaged where the shared information may not apply to all users of the system. For example, a user may not wish to see a specific piece of information, as it may not be relevant to them and its inclusion within their field of view simply acts to detract their attention from the information they require. Furthermore, a user may wish to interact with private data without any other user having access thereto in order to view and/or edit it.

It would, therefore, be desirable to provide a multi-user mixed reality system in which security and/or privacy can be accounted for, so as to enable a bespoke environment to be created for each user of the system, and aspects of the present invention seek to address at least some of these issues and, in accordance with a first aspect of the present invention, there is provided a mixed reality system comprising a headset for placing over a user's eyes, in use, said headset including a screen, the system further comprising a processor configured to receive data from one or more sources and display said data on said screen within a three-dimensional virtual environment, wherein said virtual environment includes at least two virtual, interactive data layers on which said data can be selectively displayed and within which said data can be manipulated by a user, each said layer having associated therewith a permission characteristic defining visibility thereof within said three dimensional environment displayed on the screen of another user of said system.

One of the data layers may be designated as a shared layer, such that said layer and data displayed thereon is accessible for display within the virtual environment displayed on the screen of any or all users of the system.

One of the data layers may be designated as a private layer, such that data displayed thereon is displayed only within the virtual environment on the screen of a selected one or more users of the system.

According to an exemplary embodiment of the invention, the system may include a control module configured to enable a user to selectively manipulate the relative positions of the data layers within the virtual environment displayed on their screen. In this case, the data layers may be arranged such that a first data layer is displayed in the foreground of the virtual environment displayed on a user's screen and one or more other data layers are located within the virtual environment behind the first data layer, wherein said control module may be configured to selectively interchange the data layers displayed in the foreground.

The system may further comprise a selection module configured to enable a user to selectively transfer data from a first data layer displayed within the virtual environment on their screen to a second data layer displayed therein.

In one exemplary embodiment, each data layer defined in the system may have associated therewith a security attribute defining whether or not a respective data layer is displayed within the virtual environment on a user's screen. The system may further include a security module for selectively applying security attributes to items of data within a layer. Thus, the system may further comprise an identification module for identifying a user and predefined permission attributes associated therewith, and displaying only data layers and data having corresponding security attributes within the virtual environment on said user's screen.

Another aspect of the present invention extends to a method of displaying data for viewing and/or manipulation by a plurality of users within a mixed reality system comprising at least one headset including a screen, and a processor configured to receive data from one or more sources and display said data on said screen within a three-dimensional virtual environment, the method comprising building, within said virtual environment, at least two virtual, interactive data layers, each said layer having associated therewith a permission characteristic defining visibility thereof within said three dimensional environment displayed on the screen of another user of said system, selectively displaying said data on said data layers, and providing a control function configured to enable a user to selectively manipulate said data layers so as to change the relative location thereof within the virtual environment displayed on their screen, and selectively move data displayed on a first data layer to a second data layer.

These and other aspects of the present invention will be apparent from the following specific description in which embodiments of the present invention are described, by way of examples only, and with reference to the accompanying drawings, in which:
Figure 1 is a front perspective view of a headset for use in a system according to an exemplary embodiment of the present invention;
Figure 2 is a schematic block diagram of a system according to an exemplary embodiment of the present invention; and
Figure 3 is a schematic diagram illustrating the concept of displaying data in the form of layers within a virtual environment as envisaged in accordance with an exemplary embodiment of the present invention.

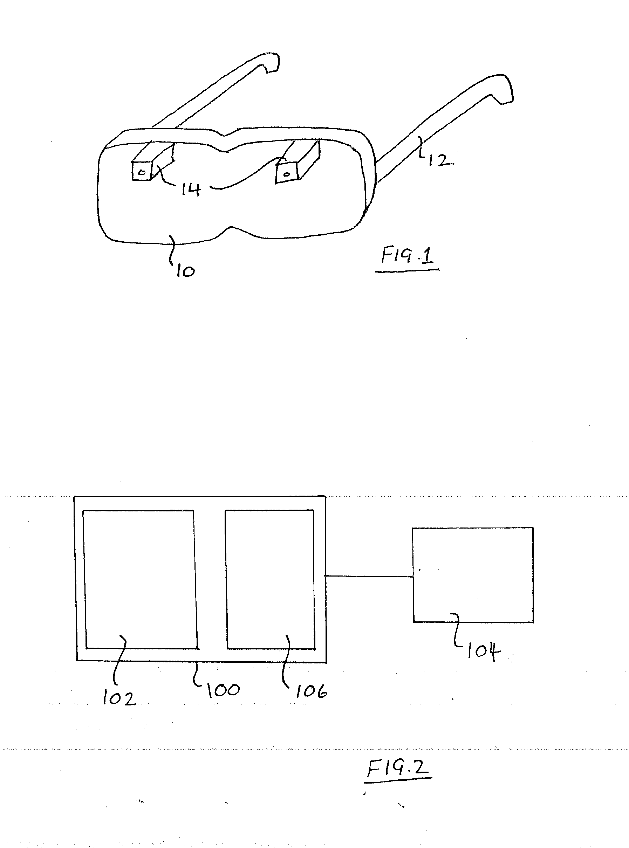

Referring to Figure 1 of the drawings, a system according to a present invention may comprise a headset comprising a visor 10 having a pair of arms 12 hingedly attached at opposing sides thereof in order to allow the visor to be secured onto a user's head, over their eyes, in use, by placing the curved ends of the arms 12 over and behind the user's ears, in a manner similar to conventional spectacles. It will be appreciated that, whilst the headset is illustrated herein in the form of a visor, it may alternatively comprise a helmet for placing over a user's head, or even a pair of contact lenses or the like, for placing within the user's eyes, and the present invention is not intended to be in any way limited in this regard. Also provided on the headset, is a pair of image capture devices 14 for capturing images of the environment, such image capture devices being mounted roughly aligned with a user's eyes in use.

The system of the present invention further comprises a processor, which is communicably connected in some way to a screen which provided inside the visor 10. Such communicable connection may be a hard wired electrical connection, in which case the processor and associated circuitry will also be mounted on the headset. However, in an alternative exemplary embodiment, the processor may be configured to wirelessly communicate with the visor, for example, by means of Bluetooth or similar wireless communication protocol, in which case, the processor need not be mounted on the headset but can instead be located remotely from the headset, with the relative allowable distance between them being dictated and limited only by the wireless communication protocol being employed. For example, the processor could be mounted on or formed integrally with the user's clothing, or instead located remotely from the user, either as a stand-alone unit or as an integral part of a larger control unit, for example.

Referring to Figure 2 of the drawings, a system according to an exemplary embodiment of the invention comprises, generally, a headset 100, incorporating a screen 102, a processor 104, and a pair of external digital image capture devices (only one shown) 106.

The processor 104 is configured to display multiple data items simultaneously within a three dimensional virtual environment. Such data items may be received from several different sources, via, for example, an Internet connection, a secure LAN, Bluetooth, or any other communications protocol, which may be wireless or otherwise.

Within a work environment, the various items of data may be required to be viewed and/or manipulated by a plurality of different users. Each user is provided with a headset 100 and, as such, their own virtual environment within which data can be displayed. However, and as stated above, in the case where there are a number of different users of the system, some or all of them may have different authorisations and permissions to access and/or manipulate the information provided and, as such, will be authorised for, and require, access to different information and different security levels. In addition, there are other situations envisaged where the shared information may not apply to all users of the system. For example, a user may not wish to see a specific piece of information, as it may not be relevant to them and its inclusion within their field of view simply acts to detract their attention from the information they require. Furthermore, a user may wish to interact with private data without any other user having access thereto in order to view and/or edit it.

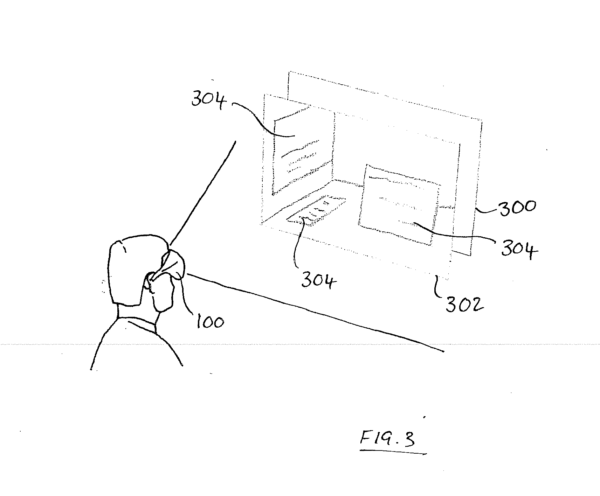

Thus, in accordance with an exemplary embodiment of the present invention, each virtual environment is provided with a plurality of data layers. Referring to Figure 3 of the drawings, at least a private layer 300 and a shared layer 302 may be provided within each user's virtual environment. However, additional layers may be added by the user (or, indeed, provided by the system) to serve specific functions and, therefore, used to quickly adopt new working environments, as necessary, and the present invention is not necessarily intended to be limited in this regard.

The data items 304 to be displayed will have security attributes associated therewith, which define which users are permitted to view and/or manipulate it. In addition, each layer has a security attribute associated therewith. Thus, in this exemplary embodiment of the invention, there may be a "private" attribute associated with the private layer 300 and a "shared" attribute associated with the shared data layer 302. Considering first the private layer 300, this is only visible to one user. Thus, a user can view and manipulate data therein without the other users being able to view their activity. The shared layer 302 appears in all of the users' virtual environments, and contains data which can be viewed and manipulated by all users of the system (subject to various security attributes, as will be discussed later. Thus, if a user wishes to manipulate a piece of data privately, they can do so by moving the data from the shared layer 302 into their private layer 300, and perform any action required. Equally, a user can create their own data item within the private layer 300. If they subsequently wish to share the data, thus manipulated/created, with the other users, it can be moved back into the shared layer 302, as required. In one exemplary embodiment of the invention, the shared layer may cache the last version of a data item that has been moved into an user's private layer for manipulation, such that the last version of that data item remains accessible on the shared layer to other authorised users.

Although the shared layer 302 can be seen by all users, it is not essential that all data thereon is viewable by all users. Indeed, some users may not be authorised to view such data, and others may not be authorised to manipulate such data. Thus, data items assigned to the shared layer 302 may have respective security attributes associated therewith, these may be assigned by the creator of the data or they may be assigned centrally, in accordance with, for example, the source from which the data is received. A first user, for example, may be authorised to view all data on the shared layer 302. In this case, all such data will be displayed on the shared layer within their virtual environment. In an exemplary embodiment of the invention, the user is able to selectively remove data they do not require in order to de-clutter their virtual environment, and reinstate such data as required. Another user may be authorised to view all data on the shared layer 302, but may only be authorised to interact with selected data items, and the security attributes associated with the displayed data items will reflect the user's permissions, thus only allowing them to interact with data items for which they are authorised to do so (in which case, such interaction may take place within the shared layer or in their private layer, as required). Thus, it is envisaged in accordance with one exemplary embodiment of the invention, that a user would only be permitted to move a data item into their private layer 300 if they have permission to interact with that data item. Yet another user may not be authorised to view certain data items included on the shared layer, and these would be identified and eliminated from their view of the shared layer 300. A security module may be provided in order to identify the user of each headset, and their levels of authorisation, and configure their view of the shared layer 302 accordingly.

As illustrated in Figure 3 of the drawings, and in accordance with one exemplary embodiment of the invention, the two layers 300, 302 are "stacked" rearwardly from the foreground of the user's field of view, although the layers could be arranged in any convenient manner and the present invention is not intended to be in any way limited in this regard. In the example shown, the shared layer 302 appears in the foreground of the user's virtual environment and the private layer 300 appears "behind" it. Data items 304 which the user is authorised to view appear on the shared layer 300, which in the example shown appears as a two-dimensional screen, but the invention is again not necessarily intended to be limited in this regard. Indeed, it is envisaged that the layers 300, 302 may be entirely three dimensional, such that when a layer is in the foreground, the data items thereon are displayed in three dimensions, with the hidden layer "behind" it having no effect on the visual representation of the front layer. Data items 304 from the "front" layer can be moved into the other layer by, for example, a dragging and dropping action, which may, for example, be facilitated by hand gestures made by the user. Equally, the user may "pull" the rear layer into the foreground by means of a predefined hand gesture, thus enabling them to view and/or manipulate data therein, and leaving the other layer sitting behind it until it is once again required for use in the foreground.

It will be apparent to a person skilled in the art, from the foregoing description, that modifications and variations can be made to the described embodiments without departing from the scope of the invention as claimed.

## Claims

1. A mixed reality system comprising a headset for placing over a user's eyes, in use, said headset including a screen, the system further comprising a processor configured to receive data from one or more sources and display said data on said screen within a three-dimensional virtual environment, wherein said virtual environment includes at least two virtual, interactive data layers on which said data can be selectively displayed and within which said data can be manipulated by a user, each said layer having associated therewith a permission characteristic defining visibility thereof within said three dimensional environment displayed on the screen of another user of said system.

2. A system according to claim 1, wherein one of said data layers is designated as a shared layer, such that said layer and data displayed thereon is accessible for display within the virtual environment displayed on the screen of any or all users of said system.

3. A system according to claim 1 or claim 2, wherein one of said data layers is designated as a private layer, such that data displayed thereon is displayed only within the virtual environment on the screen of a selected one or more users of said system.

4. A system according to any of the preceding claims, including a control module configured to enable a user to selectively manipulate the relative positions of said data layers within the virtual environment displayed on their screen.

5. A system according to claim 4, wherein said data layers are arranged such that a first data layer is displayed in the foreground of the virtual environment displayed on a user's screen and one or more other data layers are located within the virtual environment behind the first data layer, wherein said control module is configured to selectively interchange the data layers displayed in said foreground.

6. A system according to any of the preceding claims, further comprising a selection module configured to enable a user to selectively transfer data from a first data layer displayed within the virtual environment on their screen to a second data layer displayed therein.

7. A system according to any of the preceding claims, wherein each data layer defined therein has associated therewith a security attribute defining whether or not a respective data layer is displayed within the virtual environment on a user's screen.

8. A system according to any of the preceding claims, including a security module for selectively applying security attributes to items of data within a layer.

9. A system according to claim 7 or claim 8, further comprising an identification module for identifying a user and predefined permission attributes associated therewith, and displaying only data layers and data having corresponding security attributes within the virtual environment on said user's screen.

10. A method of displaying data for viewing and/or manipulation by a plurality of users within a mixed reality system comprising at least one headset including a screen, and a processor configured to receive data from one or more sources and display said data on said screen within a three-dimensional virtual environment, the method comprising building, within said virtual environment, at least two virtual, interactive data layers, each said layer having associated therewith a permission characteristic defining visibility thereof within said three dimensional environment displayed on the screen of another user of said system, selectively displaying said data on said data layers, and providing a control function configured to enable a user to selectively manipulate said data layers so as to change the relative location thereof within the virtual environment displayed on their screen, and selectively move data displayed on a first data layer to a second data layer.
